# FASCICULE DE BREVET EUROPEEN

(11) **EP 0 858 019 B1**
(45) Date de publication et mention de la délivrance du brevet: **10.07.2002**
(21) Numéro de dépôt: 98400102.4
(22) Date de dépôt: 20.01.1998
(51) Int. Cl.: G05D 23/02

(54) **Thermostat à boîtier démontable**
Thermostat mit zerlegbarem Gehäuse
Thermostat with demountable housing

(30) Priorité: 06.02.1997 FR 9701371
(43) Date de publication de la demande: 12.08.1998
(73) Titulaire: VERNET S.A., 91291 Arpajon Cédex (FR)
(72) Inventeur: Chamot, Jean, 91290 Arpajon (FR); Bouloy, Alain, 91580 Etrechy (FR)
(74) Mandataire: Jacobson, Claude

(56) Documents cités:
- DE-A- 19 504 677
- US-A- 4 583 499
- US-A- 5 395 041
- US-A- 5 479 900

## Description

L'invention concerne les thermostats du type associant un boîtier et un élément thermostatique disposé dans celui-ci, dans lesquels le déplacement d'un organe mobile sous l'influence de la température d'un fluide pénétrant dans le boîtier entraîne une action sur un dispositif solidarisé à l'organe mobile, par exemple sur une valve. L'invention est utilisable plus particulièrement mais non exclusivement dans les thermostats de réglage de débit de fluide de refroidissement des moteurs.

Pour de nombreuses raisons, et notamment la facilité et le coût de la fabrication, il est souhaitable de réaliser le boîtier sous la forme de demi-boîtiers en matière synthétique moulée assemblés par des moyens appropriés. Cependant, en l'absence de dispositions particulières, la fabrication en matière synthétique a pour inconvénients une faible résistance au fluage, une mauvaise tenue aux vibrations, des variations de caractéristiques avec le temps, notamment ; les inconvénients sont encore augmentés lorsque les thermostats sont situés dans des environnements difficiles, par exemple dans le domaine automobile où ils sont soumis à d'importantes variations de température, à des efforts mécaniques et de pression élevés, ainsi qu'à des vibrations intenses.

On connaît déjà, notamment par la demande de brevet français N° 94 01862, de tels thermostats dont le boîtier est constitué de deux demi-boîtiers respectivement inférieur et supérieur munis chacun d'une bride comportant des portées respectives se faisant vis-à-vis et unies par une bague en métal ou en matière synthétique encapsulant les deux brides avec leurs portées l'une contre l'autre.

Ces boîtiers sont difficilement démontables, leur fermeture est difficile à réaliser de manière précise, et ils sont relativement onéreux à fabriquer et à monter.

L'invention a pour but de remédier à ces inconvénients des thermostats dont le boîtier est constitué de demi-boîtiers dont les brides sont superposées, en munissant ces thermostats de moyens d'assemblage à baïonnette.

En effet, on connaît également, par le brevet US 5 395 041, un thermostat dont le boîtier est constitué de deux demi-boîtiers assemblés l'un à l'autre et qui ont chacun un corps, une bride raccordée à ce corps, ainsi qu'une chambre intérieure, les deux demi-boîtiers étant disposés en vis-à-vis avec leurs brides respectives non pas superposées comme dans FR 94 01862 mais introduites l'une dans l'autre, et un élément thermostatique monté dans le boîtier ; dans ce thermostat, en vue de constituer un dispositif d'assemblage à baïonnette, les surfaces latérales en vis-à-vis des brides comportent respectivement des saillies érigées et. des logements creusés radialement et s'étendant annulairement autour de la chambre intérieure du demi-boîtier, et des échancrures permettent d'assembler les deux demi-boîtiers par rapprochement en vis-à-vis, introduction l'un dans l'autre et rotation ; un joint annulaire ést disposé entre les deux demi-boîtiers dans un espace prévu entre des surfaces respectivement intérieure et extérieure des parois des chambres respectives des deux brides.

L'invention concerne à cet effet un thermostat du type comportant un boîtier démontable, comprenant deux demi-boîtiers assemblés l'un à l'autre et qui ont chacun un corps et une bride raccordée à ce corps ainsi qu'une chambre intérieure débouchant au moins du coté de la bride, les deux demi-boîtiers étant disposés vis-à-vis avec leurs brides respectives superposées, et un élément thermostatique monté dans ce boîtier, thermostat caractérisé en ce que les deux demi-boîtiers comportent respectivement au moins une saillie coudée et au moins un logement coudé présentant des formes conjuguées, respectivement érigée sur et creusé dans des surfaces libres des brides se faisant vis-à-vis, s'étendant annulairement autour de la chambre intérieure du demi-boîtier et présentant au moins une échancrure de telle sorte que les deux demi-boîtiers puissent être assemblés par rapprochement en vis-à-vis et rotation, et en ce qu'un joint annulaire est disposé entre les deux demi-boîtiers dans une espace délimité par ladite saillie de l'un des demi-boîtiers et au moins une surface extérieure de la paroi de la chambre de l'autre demi-boîtier.

Grâce à ces caractéristiques, le boîtier est d'un coût modéré, un montage fiable peut être réalisé, et le boîtier peut être aisément et rapidement démonté.

D'autres caractéristiques et avantages de l'invention ressortiront de la description qui va suivre, de formes de réalisation de l'invention données à titre d'exemples et illustrées par les dessins ci-joints dans lesquels :
- la figure 1 est une vue de dessus d'un demi-boîtier entrant dans la constitution d'un thermostat selon l'invention,
- la figure 2A est une demi-coupe longitudinale d'une partie d'un thermostat selon l'invention dans une première forme de réalisation,
- la figure 2B montre un détail très agrandi, de la figure 2,
- la figure 3A est une demi-coupe longitudinale d'une partie d'un thermostat selon l'invention dans une deuxième forme de réalisation,
- la figure 3B montre un détail très agrandi, de la figure 3A,
- la figure 4 est une demi-coupe longitudinale d'une partie d'un thermostat selon l'invention dans une troisième forme de réalisation,
- la figure 5A est une vue de dessus d'une rondelle entrant dans la constitution d'une quatrième forme de réalisation d'un thermostat selon l'invention,
- la figure 5B est une vue de profil de la rondelle de la figure 5A,
- la figure 6 est une demi-coupe longitudinale d'une partie d'un thermostat selon l'invention dans la quatrième forme de réalisation.

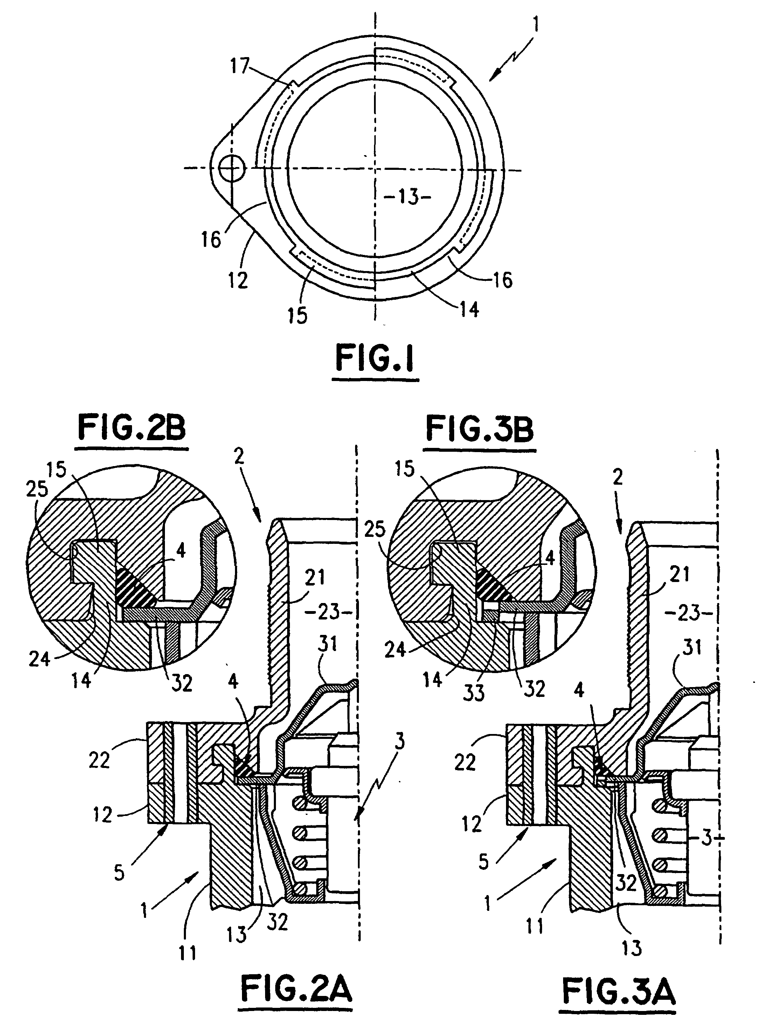

Le demi-boîtier 1 représenté sur la figure 1, visible également en tant que boîtier inférieur sur les autres figures, présente un corps 11 auquel se raccorde une bride 12 présentant une forme approximativement circulaire prolongée ici par une oreille de fixation, ou plusieurs oreilles, par exemple deux oreilles diamétralement opposées ; le demi-boîtier 2 visible en tant que boîtier supérieur sur les figures présente également un corps 21 auquel se raccorde une bride 22 de forme extérieure approximativement identique, de telle sorte que les contours des deux brides 12, 22 puissent se superposer lorsque les deux demi-boîtiers 1, 2 sont assemblés l'un vis-à-vis de l'autre ; les oreilles de chaque bride sont percées d'un trou traversant positionné de telle sorte que dans une position de superposition prédéterminée par une ou plusieurs butées positives de positionnement prévues dans au moins l'un des deux demi-boîtiers, les trous respectifs des oreilles superposées soient alignés en vis-à-vis de façon précise.

Les deux demi-boîtiers présentent une chambre intérieure 13, 23 ici de forme générale cylindrique, destinée à être raccordée à un circuit de fluide.

Selon l'invention, dans les formes de réalisation des figures 2A, 2B, 3A, 3B, l'élément thermostatique 3 s'étend pour partie dans chacun des deux demi-boîtiers. La fixation de cet élément thermostatique est obtenue par le fait que celui-ci comporte une enveloppe extérieure 31 métallique munie d'une collerette 32 en appui (figures 2B et 3B) sur une surface d'appui en forme de couronne circulaire au pourtour de la chambre du demi-boîtier inférieur en face du demi-boîtier supérieur, laquelle collerette 32 est plaquée contre cette surface d'appui par la poussée qu'exerce sur elle un joint d'étanchéité 4 annulaire disposé dans un espace compris entre les deux demi-boîtiers. Plus précisément, le joint annulaire 4 est écrasé entre la collerette, une surface de compression tronconique du demi-boîtier supérieur et une surface de retenue du demi-boîtier inférieur qui sera définie plus loin, délimitant l'espace dans lequel le joint est disposé ; ce joint annulaire 4 assure l'étanchéité avec l'intérieur, ainsi que l'étanchéité amont-aval, du thermostat, et également tout ou partie d'une fonction de rattrapage de jeu comme on le verra dans la suite.

Dans cette forme de réalisation, l'extrémité de la paroi de la chambre 23 du demi-boîtier supérieur située du côté de la bride 22 est légèrement en retrait par rapport à la surface libre de la bride afin de laisser un espace à la collerette 32 de l'enveloppe 31, et la surface de compression tronconique s'étend, depuis cette extrémité, à l'extérieur de cette paroi, en s'évasant en s'éloignant de la surface libre.

Egalement selon l'invention, l'assemblage des deux demi-boîtiers 1, 2 et la compression du joint annulaire 4 sont obtenus par le fait que les brides des deux demi-boîtiers inférieur et supérieur comportent des moyens du type à baïonnette permettant, après rapprochement des surfaces libres respectives des deux brides, un assemblage parfait à la suite d'une rotation relative ici d'un huitième de tour.

Ces moyens d'assemblage sont constitués par au moins une saillie et au moins un logement coudés présentant des ailes 14, 15, 24, 25 de formes conjuguées respectivement sur l'un et dans l'autre demi-boîtier, érigée sur et creusée dans leurs surfaces libres respectives se faisant vis-à-vis, s'étendant ici en anneau le long d'une circonférence qui s'étend concentriquement à leur chambre intérieure. Le profil de la saillie ici sur le demi-boîtier inférieur et du logement ici dans le demi-boîtier supérieur est en forme de L inversé dans la position représentée sur les figures, dont une branche se raccorde à cette surface libre et dont l'autre branche s'étend parallèlement à celle-ci, vers l'extérieur, de telle sorte que les ailes 14, 15 de la saillie et les ailes 24; 25 du logement correspondant aux deux branches du L inversé (ou du L), s'imbriquent mutuellement, la mise en imbrication étant rendue possible par le fait que ces saillie et logement coudés présentent au moins une échancrure. Plus particulièrement, ici, la saillie du demi-boîtier inférieur présente quatre discontinuités 16 réparties à angles droits dans son aile 15 correspondant à la branche du L ou du L inversé qui s'étend parallèlement à la surface libre de la bride 12 ; de même, le logement du demi-boîtier supérieur comporte quatre échancrures dans la surface libre de sa bride 22, réparties à angles droits, afin de permettre le rapprochement des deux surfaces libres et un bon assemblage après une rotation d'un huitième de tour.

C'est la surface intérieure de la saillie en anneau du demi-boîtier 1 inférieur qui constitue la surface de retenue de ce demi-boîtier pour le joint annulaire 4.

Afin de faciliter le centrage mutuel des deux demi-boîtiers 1, 2 et le début de leur rotation relative, la saillie ou/et le logement peuvent présenter des chanfreins ou rampes d'entrée (non représentés sur les dessins).

Afin d'arrêter la rotation lorsque les trous des oreilles sont dans le prolongement l'un de l'autre, la saillie ou/et le logement présentent des butées positives de positionnement, telles que les butées 17 en bout des saillies du demi-boîtier inférieur visibles sur la figure 1.

A la suite d'une rotation d'une fraction de tour aboutissant à l'assemblage en butée des deux demi-boîtiers, les oreilles des brides 12, 22 de ceux-ci sont exactement en superposition, et comme leurs trous respectifs sont alors parfaitement alignés, il est aisé de rendre impossible tout démontage involontaire en enfilant une goupille de fixation 5 de dimensions appropriées dans les trous en regard (verrouillage positif).

Dans la forme de réalisation des figures 2A et 2B, le joint annulaire 4, dont la section prend une forme approximativement triangulaire, rattrape le jeu inévitable dû aux tolérances de fabrication et facilitant le montage, ainsi que ceux dûs aux conditions climatiques et au vieillissement, radialement et axialement ; ce rattrapage de jeu se traduit par le fait qu'une paroi de la saillie et une paroi du logement qui s'étendent parallèlement aux surfaces libres des brides 12, 22, sont plaquées l'une contre l'autre.

Dans la forme de réalisation des figures 3A et 3B, un moyen élastique supplémentaire est inséré entre le même type de joint annulaire 4 et la surface d'appui du demi-boîtier 1 inférieur afin de rattraper tout ou partie des jeux. Ce moyen élastique est ici intégré à la collerette 32 de l'enveloppe métallique de l'élément thermostatique, réalisée dans un matériau déformable élastiquement et présentant par exemple des fentes séparant des zones dont au moins certaines 33 sont légèrement fléchies ou décalées par rapport au plan général de la collerette, à la manière des rondelles éventail.

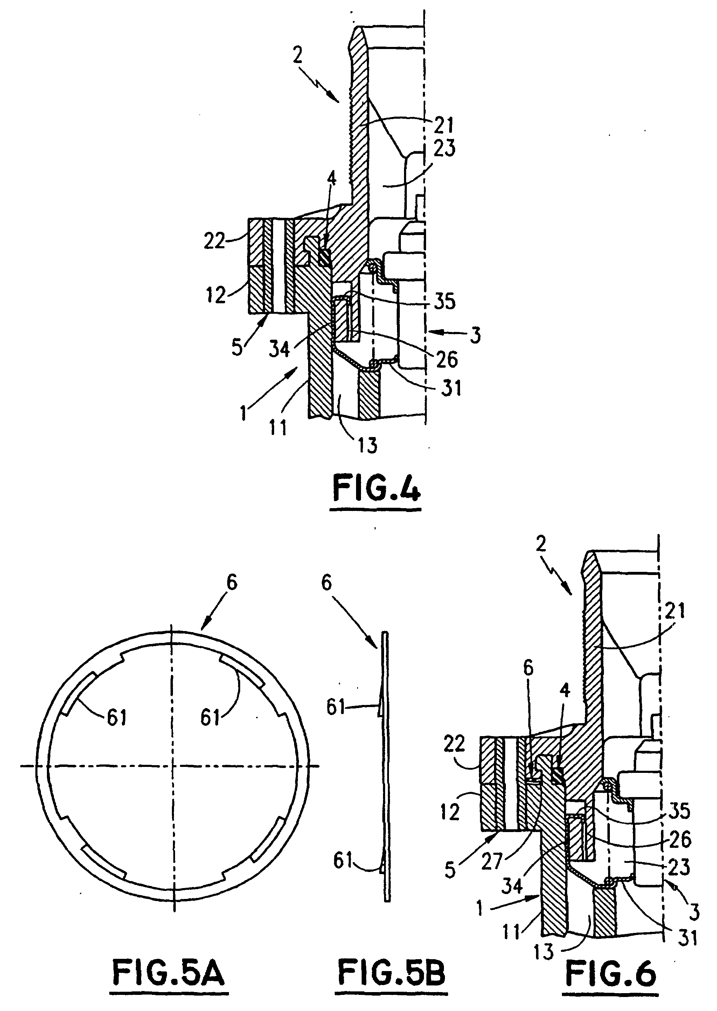

Dans les formes de réalisation des figures 4, 5A, 5B et 6, sur lesquelles les mêmes repères numériques que précédemment ont été utilisés pour désigner les mêmes détails, l'élément thermostatique 3 s'étend pour sa plus grande partie dans le demi-boîtier supérieur 2, et à cette fin, l'extrémité de la paroi de sa chambre 23 située du côté de la surface libre de la bride 22 est très proéminente par rapport à cette surface libre et ainsi s'étend largement dans la chambre 13 du demi-boîtier inférieur 1. Dans ces formes de réalisation, l'enveloppe extérieure 31 métallique de l'élément thermostatique ne comporte pas de collerette adaptée pour être insérée entre les deux demi-boîtiers, mais un dispositif d'accrochage sous la forme d'une demi-cage 34 annulaire s'étendant depuis le pourtour de la base de l'élément, dont au moins une partie insérée entre les parois cylindriques concentriques des chambres 13, 23 des deux demi-boîtiers présente un prolongement 35 recourbé vers l'intérieur de manière à s'accrocher dans un logement 26 correspondant creusé dans la paroi de la chambre 23 du demi-boîtier supérieur 2. Le fond de la demi-cage peut être soutenu par une partie du demi-boîtier inférieur.

Dans ces formes de réalisation, l'étanchéité est également assurée par un joint annulaire 4, et celui-ci est écrasé entre une surface d'appui du demi-boîtier inférieur 1, deux surfaces de compression respectivement plane et cylindrique du demi-boîtier supérieur 2, et une surface de retenue du demi-boîtier inférieur comme cela a été décrit précédemment.

En effet, l'assemblage des brides 12, 22 des deux demi-boîtiers est assuré de la même manière que pour les formes de réalisation déjà décrites, et il est clair que le mode de fixation selon l'invention est applicable à un grand nombre de structures de thermostat.

C'est pourquoi c'est également la surface intérieure de la saillie en anneau du demi-boîtier inférieur qui constitue la surface de retenue pour le joint annulaire.

Dans la forme de réalisation de la figure 4, le joint annulaire 4, dont la section prend une forme approximativement rectangulaire, rattrape également les jeux divers.

En revanche, un moyen élastique 6 supplémentaire de rattrapage de jeu représenté sur les figures 5A et 5B peut être inséré entre les deux demi-boîtiers 1, 2, comme c'est le cas dans la forme de réalisation de la figure 6.

Ce moyen élastique 6 est réalisé sous la forme d'une rondelle métallique dont le pourtour est circulaire mais qui comporte des dentelures intérieures 61 présentant des fentes de telle sorte qu'elles puissent être légèrement fléchies ou décalées hors du plan général de la rondelle. Cette rondelle est enfilée autour de la saillie en anneau du demi-boîtier inférieur 1, et l'un des deux demi-boîtiers 1, 2 présente un logement pour cette rondelle 6, par exemple sous la forme d'un lamage annulaire. Dans la forme de réalisation de la figure 6, c'est dans la bride 22 du demi-boîtier supérieur 2 qu'est réalisé un tel logement 27.

Pour le montage du thermostat, dans la forme de réalisation des figures 1, 2A, 2B, 3A, 3B, on dispose l'élément thermostatique 3 dans le demi-boîtier inférieur 1 de telle sorte que sa collerette 32 soit en appui sur la surface d'appui de celui-ci, on place le joint d'étanchéité 4 sur la collerette, puis on rapproche les deux demi-boîtiers 1, 2 comme cela a déjà été mentionné, on effectue un huitième de tour, et on insère la ou les goupilles 5 anti-démontage.

Dans les formes de réalisation des figures 4, 5A, 5B, 6, on accroche l'élément thermostatique 3 au demi-boîtier supérieur 2, on met en place le joint d'étanchéité 4 et éventuellement la rondelle 6 de rattrapage de jeu, puis on rapproche les deux demi-boîtiers 1, 2 comme cela a déjà été mentionné, et on poursuit les opérations comme précédemment.

On peut noter que le thermostat peut être démonté en vue de son remplacement ou du changement de l'élément thermostatique 3, en retirant la ou les goupilles 5 au moyen d'un outil approprié, en effectuant un huitième de tour en direction inverse de celle du montage, et en séparant les deux demi-boîtiers 1, 2 ; ce démontage a pour avantages d'être aisé et de n'être pas destructif.

## Revendications

1. Thermostat du type comportant un boîtier démontable, comprenant deux demi-boîtiers (1, 2) assemblés l'un à l'autre et qui ont chacun un corps (11, 21) et une bride (12, 22) raccordée à ce corps ainsi qu'une chambre intérieure (13, 23) débouchant au moins du côté de la bride, les deux demi-boîtiers (1, 2) étant disposés vis-à-vis avec leurs brides respectives superposées, et un élément thermostatique (3) monté dans ce boîtier, thermostat **caractérisé en ce que** les deux demi-boîtiers comportent respectivement au moins une saillie coudée et au moins un logement coudé présentant des formes conjuguées, respectivement érigée sur et creusé dans des surfaces libres des brides (12, 22) se faisant vis-à-vis, s'étendant annulairement autour de la chambre intérieure du demi-boîtier et présentant au moins une échancrure de telle sorte que les deux demi-boîtiers puissent être assemblés par rapprochement en vis-à-vis et rotation, et **en ce qu'**un joint annulaire (4) est disposé entre les deux demi-boîtiers dans un espace délimité par ladite saillie de l'un des demi-boîtiers et au moins une surface extérieure de la paroi de la chambre (23) de l'autre demi-boîtier.

2. Thermostat selon la revendication 1, **caractérisé en ce que** les brides (12, 22) comportent au moins une paire de trous respectifs disposés vis-à-vis, et une goupille (5) de fixation s'étendant dans ces trous, de telle sorte que les deux demi-boîtiers (1, 2) ne puissent subir une rotation relative qu'en l'absence de cette goupille (5).

3. Thermostat selon la revendication 1, **caractérisé en ce que** la saillie et le logement comportant une aile (15, 25) parallèle à la surface libre de la bride de leur demi-boîtier respectif de telle sorte que par rapprochement en vis-à-vis et rotation, la saillie et le logement coudés de forme conjuguée soient imbriqués.

4. Thermostat selon la revendication 1, **caractérisé en ce que** la saillie coudée comporte une aile (14) se raccordant à la surface libre de la bride (12) en s'étendant en anneau tout autour de la chambre (13) du demi-boîtier considéré, et une aile (15) s'étendant perpendiculairement et présentant des discontinuités (16) constituant les échancrures de la saillie.

5. Thermostat selon la revendication 1, **caractérisé en ce que** la saillie comporte une aile (15) présentant quatre discontinuités (16) régulièrement espacées le long dudit anneau, le logement comporte quatre échancrures et les brides (12, 22) comportent chacune au moins une oreille percée d'un trou pour recevoir ladite goupille (5).

6. Thermostat selon la revendication 1, **caractérisé en ce que** l'élément thermostatique (3) s'étend pour partie dans chacun des deux demi-boîtiers (1, 2) et comporte une enveloppe extérieure (31) munie d'une collerette (32) insérée entre les deux demi-boîtiers, cette collerette étant en appui contre une surface d'appui de l'un des deux demi-boîtiers et plaquée contre elle par un joint annulaire (4).

7. Thermostat selon la revendication 6, **caractérisé en ce que** la collerette (32) comporte un moyen élastique de rattrapage de jeu intégré à elle, en métal, comportant des zones (33) fléchies ou décalées par rapport à son plan général.

8. Thermostat selon la revendication 1, **caractérisé en ce que** l'élément thermostatique (3) s'étend pour sa plus grande partie dans le demi-boîtier supérieur (2) dont la chambre (23) se prolonge dans celle (13) du demi-boîtier inférieur (1), et comporte une demi-cage (34) dont au moins une partie insérée entre des parois concentriques des deux demi-boîtiers présente un prolongement (35) recourbé pour s'accrocher dans un logement (26) de la paroi de la chambre (23) du demi-boîtier supérieur (2).

9. Thermostat selon la revendication 1, **caractérisé en ce qu'**un moyen élastique (6) de rattrapage de jeu sur la forme d'une rondelle comportant des dentelures (61) fléchies ou décalées par rapport à son plan général, est inséré entre les deux demi-boîtiers (1, 2).

10. Thermostat selon la revendication 9, **caractérisé en ce que** la rondelle (6) est disposée à l'extérieur d'un anneau formé par la saillie du demi-boîtier inférieur (1).

11. Thermostat selon les revendications 1 et 2, **caractérisé en ce qu'**au moins l'un des deux demi-boîtiers (1, 2) comporte au moins une butée positive (17) pour arrêter la rotation relative des deux demi-boîtiers lorsque lesdits trous respectifs sont disposés vis-à-vis.

## Claims

1. Thermostat of the type with a housing which can be dismantled comprising two semi-housings (1, 2) assembled together, each of them having a body (11, 21) and a flange (12, 22) connected to this body as well as an inside chamber (13, 23) opening at least onto the flange side, the two semi-housings (1, 2) being arranged opposite each other with their respective flanges superimposed, and a thermostat element (3) fitted in this housing, the thermostat **characterised in that** the two semi-housings have respectively at least one bent projection and at least a bent housing with mating shapes, respectively set onto and sunk into free surfaces of the flanges (12, 22) opposite each other, extending annularly around the inside chamber of the semi-housing and with at least one indentation in such a way that the two semi-housings can be assembled by bringing them together and turning them, and **in that** an annular seal (4) is arranged between the two semi-housings in a space delineated by the said projection of one of the semi-housings and at least one outer surface of the wall of the chamber (23) of the other semi-housing.

2. Thermostat according to Claim 1, **characterised in that** the flanges (12, 22) have at least one pair of respective holes arranged opposite each other, and a fastening pin (5) extending into these holes in such a way that the two semi-housings (1, 2) can only turn relative to each other if this pin (5) is removed.

3. Thermostat according to Claim 1, **characterised in that** the projection and the housing have a wing (15, 25) parallel to the free surface of the flange of their respective semi-housing so that by bringing them opposite one another and turning them, the projection and the housing, bent so that they mate, are interlaced.

4. Thermostat according to Claim 1, **characterised in that** the bent projection has a wing (14) connecting to the free surface of the flange (12) while extending as a ring all around the chamber (13) of the semi-housing in question, and a wing (15) extending perpendicularly and with breaks (16) forming the indentations of the projection.

5. Thermostat according to Claim 1, **characterised in that** the projection has a wing (15) in which there are four breaks (16) spaced regularly along the said ring, the housing has four indentations and the flanges (12, 22) each has at least one lug in which a hole is drilled to take the said pin (5).

6. Thermostat according to Claim 1, **characterised in that** the thermostat element (3) extends partly into each of the two semi-housings (1, 2) and has an outer casing (31) fitted with a collar (32) inserted between the two semi-housings, this collar being supported against a supporting surface of one of the two semi-housings and being laid against it by an annular seal (4).

7. Thermostat according to Claim 6, **characterised in that** the collar (32) has incorporated in it a flexible metal means of catching up play, and has areas (33) deflected or displaced compared with its general plane.

8. Thermostat according to Claim 1, **characterised in that** the largest part of the thermostat element (3) extends into the top semi-housing (2), the chamber (23) of which extends into that (13) of the bottom semi-housing (1), and has a semi-cage (34), at least one part of which, inserted between concentric walls of the two semi-housings, has an extension (35) bent back to hook into a housing (26) of the wall of the chamber (23) of the top semi-housing (2).

9. Thermostat according to Claim 1, **characterised in that** a flexible means (6) for catching up play in the form of a washer with serrations (61), deflected or displaced compared with its general plane, is inserted between the two semi-housings (1, 2).

10. Thermostat according to Claim 9, **characterised in that** the washer (6) is arranged at the outside of a ring formed by the projection of the bottom semi-housing (1).

11. Thermostat according to Claims 1 and 2, **characterised in that** at least one of the two semi-housings (1, 2) has a positive stop (17) to stop the relative rotation of the two semi-housings when the said respective holes are arranged opposite each other.

## Patentansprüche

1. Thermpstat mit zerlegbarem Gehäuse, aufweisend zwei zusammengesetzte Gehäusehälften (1, 2), die jeweils einen Körper (11, 21) und einen Flansch (12, 22) aufweisen, der mit diesem Körper derart verbunden ist, dass ein Kammerinnenraum (13, 23) zumindest zur Seite des Flansches ausmündet, wobei die beiden Gehäusehälften (1, 2) aufeinander zuweisend so angeordnet sind, dass ihre jeweiligen Flansche übereinander zu liegen kommen, und ein Thermostatelement (3), das in diesem Gehäuse angeordnet ist, wobei der Thermostat **dadurch gekennzeichnet ist, dass** die zwei Gehäusehälften jeweils zumindest eine gekröpfte Auskragung und zumindest eine gekröpfte Aufnahme aufweisen, die komplementäre Formen besitzen und in den freien Seiten der Flansche (12, 22) einander gegenüberliegend hoch stehen bzw. gekröpft sind, sich ringförmig um die Innenkammer der Gehäusehälfte erstrecken und zumindest eine Aussparung derart aufweisen, dass die zwei Gehäusehälften zusammengebaut werden können, indem sie aufeinander zu bewegt und gedreht werden, und dass eine Ringverbindung (4) zwischen den zwei Gehäusehälften in einem Raum angeordnet ist, der durch die Auskragung von einer der Gehäusehälften und zumindest einer Außenseite der Wand der Kammer (23) der anderen Gehäusehälfte begrenzt ist.

2. Thermostat nach Anspruch 1, **dadurch gekennzeichnet, dass** die Flansche (12, 22) zumindest ein Paar von jeweiligen Löchern aufweisen, die aufeinander zuweisen, und einen Haltestift (5), der sich in diesen Löchern derart erstreckt, dass die zwei Gehäusehälften (1, 2) einer Relativdrehung nur bei Abwesenheit dieses Stifts (5) unterliegen können.

3. Thermostat nach Anspruch 1, **dadurch gekennzeichnet, dass** die Auskragung und die Aufnahme einen Flügel (15, 25) parallel zur freien Oberfläche des Flansches ihrer jeweiligen Gehäusehälfte derart aufweisen, dass, wenn sie aufeinander zu bewegt und gedreht werden, die gekröpfte Auskragung und die gekröpfte Aufnahme komplementärer Form sich überlappen.

4. Thermostat nach Anspruch 1, **dadurch gekennzeichnet, dass** die gekröpfte Auskragung zumindest einen Flügel (14) aufweist, der sich an die freie Oberfläche des Flansches (12) anschließt und sich ringförmig um die Kammer (13) der betreffenden Gehäusehälfte erstreckt, und einen Flügel (15), der sich senkrecht erstreckt, und Unterbrechungen (16) aufweist, welche die Aussparungen der Auskragung bilden.

5. Thermostat nach Anspruch 1, **dadurch gekennzeichnet, dass** die Auskragung einen Flügel (15) aufweist, der vier Unterbrechungen (16) aufweist, die entlang dieses Rings regelmäßig beabstandet sind, wobei die Aufnahme vier Aussparungen aufweist, und wobei die Flansche (12, 22) jeweils zumindest einen von einem Loch durchsetzten Lappen zur Aufnahme des Stifts (5) aufweisen.

6. Thermostat nach Anspruch 1, **dadurch gekennzeichnet, dass** das Thermostatelement (3) sich teilweise in jeder der Gehäusehälften (1, 2) erstreckt und eine Außenhülle (31) aufweist, die mit einem Kragen (32) versehen ist, der zwischen die zwei Gehäusehälften eingepasst ist, wobei dieser Kragen an einer Anlagefläche von einer der Gehäusehälften anliegt und gegen sie durch eine Ringverbindung (4) festgelegt ist.

7. Thermostat nach Anspruch 6, **dadurch gekennzeichnet, dass** der Kragen (32) ein elastisches Spielverringerungsmittel aufweist, das aus Metall integral mit ihm gebildet ist und Zonen (33) aufweist, die relativ zu seiner Hauptebene ausgebogen oder versetzt sind.

8. Thermostat nach Anspruch 1, **dadurch gekennzeichnet, dass** das Thermostatelement (3) sich über seinen größten Teil in der oberen Gehäusehälfte (2) erstreckt, deren Kammer (23) eine Verlängerung von derjenigen (13) der unteren Gehäusehälfte (1) darstellt, und dass es eine Einsatzhälfte (34) aufweist, von der zumindest ein zwischen den konzentrischen Wänden der zwei Gehäusehälften eingepasster Teil eine umgebogene Verlangerung (35) zur Verankerung in der Aufnahme (26) der Wand der Kammer (23) der oberen Gehäusehälfte (2) aufweist.

9. Thermostat nach Anspruch 1, **dadurch gekennzeichnet, dass** das elastische Spielverringerungsmittel (6) in Form einer Unterlegscheibe zu seiner Hauptebene ausgebogene oder versetzte Zacken (61) aufweist, und zwischen die zwei Gehäusehälften (1, 2) eingepasst ist.

10. Thermostat nach Anspruch 9, **dadurch gekennzeichnet, dass** die Unterlegscheibe (6) außerhalb eines Rings angeordnet ist, der durch die Auskragung der unteren Gehäusehälfte (1) gebildet ist.

11. Thermostat nach Anspruch 1 oder 2, **dadurch gekennzeichnet, dass** zumindest eine der Gehäusehälften (1, 2) zumindest einen vorstehenden Anschlag (17) aufweist, um die Relativdrehung der zwei Gehäusehälften zu begrenzen, wenn die jeweiligen Löcher in Gegenüberlage zueinander angeordnet sind.
